**Europäisches Patentamt**

**European Patent Office**

**Office européen des brevets**

(19)

(11) Publication number : **0 138 387 B2**

(12)
# NEW EUROPEAN PATENT SPECIFICATION

(45) Date of publication of the new patent specification : **19.08.92 Bulletin 92/34**

(51) Int. Cl.⁵ : **B60J 3/00**

(21) Application number : **84306271.2**

(22) Date of filing : **13.09.84**

(54) **A Visor.**

(30) Priority : **15.09.83 US 532395**

(43) Date of publication of application :
**24.04.85 Bulletin 85/17**

(45) Publication of the grant of the patent :
**28.06.89 Bulletin 89/26**

(45) Mention of the opposition decision :
**19.08.92 Bulletin 92/34**

(84) Designated Contracting States :
**DE FR GB IT**

(56) References cited :
**DE-U- 1 895 986**
**FR-A- 2 429 685**
**US-A- 2 486 096**

(56) References cited :
**US-A- 2 894 576**
**US-A- 3 140 781**
**Prospekt "Der kleine Musterkoffer", Gebr.**
**Happich, 1969, Nr. 170**

(73) Proprietor : **PRINCE CORPORATION**
**Windcrest Drive**
**Holland Michigan 49423 (US)**

(72) Inventor : **Cody, Michael James**
**15663 Ryan Drive**
**Holland Michigan 49423 (US)**
Inventor : **Spykerman, Scott Alan**
**402 West 31st Street**
**Holland Michigan 49423 (US)**

(74) Representative : **Robinson, Anthony John**
**Metcalf et al**
**Kilburn & Strode 30 John Street**
**London, WC1N 2DD (GB)**

EP 0 138 387 B2

## Description

The present invention relates to a visor and particularly to a visor, for example an automatic visor, incorporating storage means therein.

There exists a variety of visors with attachments for storage of personal articles such as combs, make-up and the like. Such devices can be part of the visor itself or an attachment. US-A-1,990,413; US-A-2,148,557; US-A-2,547,101; US-A-4,275,916; and US-A-4,275,917 describe such structures. CH-A-474,381 shows a zippered storage compartment for a visor while GB-A-1,099,694 illustrates a visor including pockets for storage.

A visor having those features set out in the precharacterising portion of Claim 1 is known from US-A-4,275,916. This has the disadvantage that, in order to give access to the storage compartment, the mirror panel has to be raised, and in the raised position, of course, the mirror cannot be used. Apart from causing unnecessary wear on the panel hinges, this is inconvenient for a user of the visor since in order to retrieve and use for example a comb from the compartment, the panel has to be raised and lowered again at least twice-once when retrieving the comb and once when replacing it.

According to the present invention a visor is characterised by those features set out in the characterising portion of Claim 1.

Such a visor provides a visor body having a relatively large central recess formed therein which opens towards one side of the visor body. A mirror panel for supporting a mirror is coupled to and encloses a substantial portion of the recess and defines an opening on one edge of the recess to provide access to the storage compartment formed between the panel and the floor of the recess. A mirror may be positioned on the panel and faces outwardly for use as a vanity mirror. The mirror may be fixed in the said one position or, alternatively, in another embodiment of the invention, the panel may be pivotally and slidably mounted to guide means within the recess such that it can be reversed to selectively expose the mirror for use or conceal the mirror for safety. The side opposite the mirror may, in some embodiments, include a pocket for receiving objects for storage in addition to the storage area behind the panel and within the recess.

In other embodiments of the invention, cover means are provided for selectively covering the mirror when in a position facing outwardly of the visor.

Thus, the present invention extends to a vehicle comprising a visor body having a recess formed in one side thereof, a panel assembly shaped to fit in the recess, the assembly including a front panel having a mirror opening and defining an opening adjacent one edge for access to the visor recess; a mirror secured to the panel behind the opening; and cover means slidably mounted to the panel for selectively covering the mirror.

The present invention may be put into practice in various ways but a visor and two modifcations embodying the invention will now be described by way of examples with reference to the accompanying drawings, in which:

Figure 1 is a front elevational view of a visor;

Figure 2 is a cross-sectional view of the structure of Figure 1 taken along section line II-II of Figure 1;

Figure 3 is a cross-sectional view of a portion of the structure shown in Figure 1 taken along section line III-III of Figure 1;

Figure 4 is a perspective, partly phantom view of an alternative visor;

Figure 5 is a cross-sectional view of a portion of the structure shown in Figure 4 taken along section line V-V of Figure 4;

Figure 6 is a perspective view of the visor shown in Figure 4 with the movable panel shown in a reversed position;

Figure 7 is a perspective view of a further modification;

Figure 8 is a perspective view of a portion of the structure shown in Figure 7;

Figure 9 is a perspective view of the mirror structure shown in Figure 7; and

Figure 10 is an enlarged, fragmentary, cross-sectional view taken along section X-X of Figure 7.

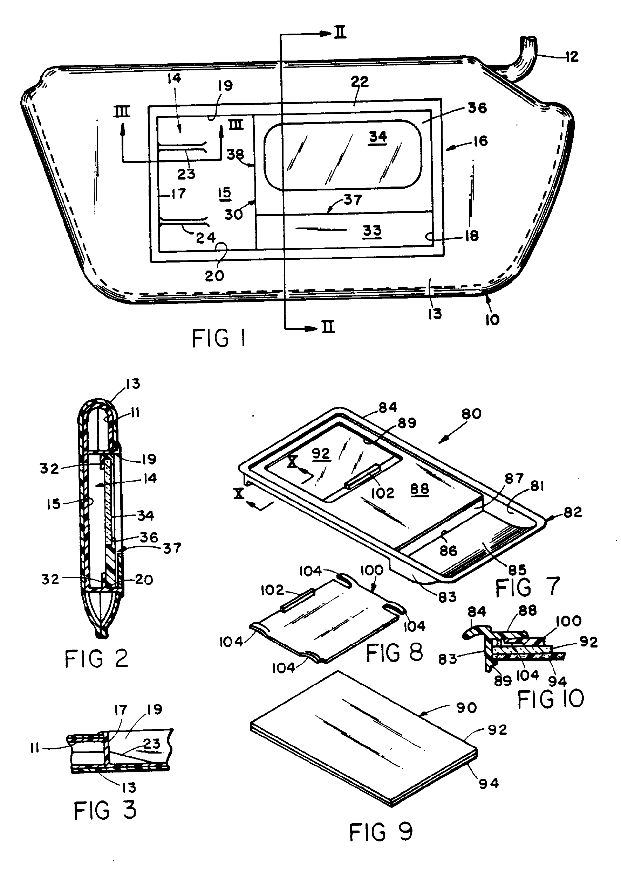

Referring initially to Figure 1, there is shown an automotive visor 10 having a moulded polymeric core 11 (Figure 2) and supporting along its top edge, a visor pivot rod assembly 12 which can be of the construction described in US-A-4,352,518. The visor core is covered with an upholstery material 13 to conform to the vehicle's interior upholstery. One side of the visor core includes a generally rectangular and relatively large recess 14 formed therein which, as seen in Figure 1, occupies a substantial portion of the visor body. A storage member 16 integrally moulded of a polymeric material such as polycarbonate is inserted into the recess 14 and conventionally secured to the visor body. The storage member 16 integrally includes a floor 15 recessed from the outer surface of the visor, sidewalls 17 and 18, a top wall 19 and a bottom wall 20. A peripheral flange 22 is integrally joined to the outer edges of the walls and provides a trim appearance by overlying the upholstery material 13 at the junction of the sidewalls and upper and lower walls. A pair of inclined ramps 23 and 24 extend between the wall 17 and the floor 15 with the ramp 23 being shown in Figure 3. The ramps are inclined at an angle of approximately 30 degrees and facilitate removal of planar objects such as maps from the storage area.

A mirror panel assembly 30 is secured to the frame of the storage member 16 and defines one wall of the storage compartment between the assembly 30 and the floor 15. In the embodiment, as best seen in Figure 2, the panel is supported by flange means 32 extending from the upper and lower walls 19 and 20 with the panel assembly 30 being secured thereto by a suitable bonding adhesive. The panel assembly 30 may also be covered with a suitable upholstery fabric 33 of the same type as fabric 13. In this embodiment the panel assembly 30 includes a mirror 34 secured behind a face panel 36 to provide a vanity mirror for use in connection with the visor. The generally rectangular mirror 34 occupies approximately two thirds (2/3) of the upper portion of the panel assembly 30 below which there is formed a fabric pocket 37 for receiving personal care items such as a comb.

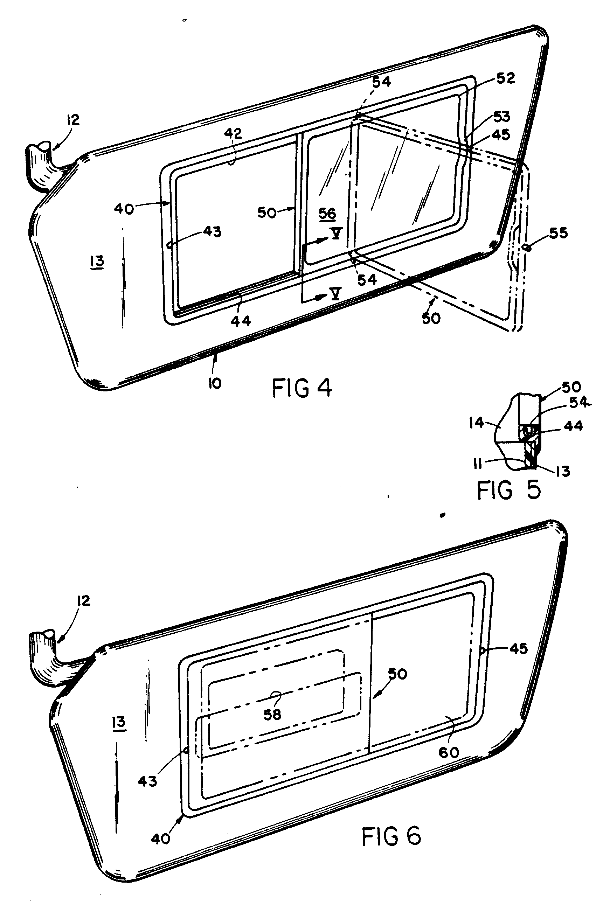

The left edge of the panel assembly 30 defines an opening 38 for receiving generally planar objects such as roadmaps which can be slipped behind the panel assembly 30 for storage within the recess 14 of the visor. The ramps 23 and 24 assist in urging and holding the edge of a map slightly raised from the floor 15 to facilitate grasping and removal of such objects from the storage receptacle so defined. In the embodiment of the invention illustrated in Figure 1 to 3, the mirror panel assembly 30 is fixedly mounted to the visor recess frame or storage member 16 while in the embodiments illustrated in Figures 4 to 6 the mirror panel assembly is pivotally and slidably mounted to permit reversal. The alternative embodiments illustrated in Figures 4 to 6 will now be described.

In the alternative embodiment of visor as shown in Figure 4, the visor 10 can be of similar construction as the first embodiment with similar part numbers identified by identical reference numbers. The visor body illustrated in Figure 4 also includes a generally rectangular recess 14 formed therein for receiving a frame 40 having substantially the same construction as frame assembly of the storage member 16 and peripheral flange 22 with the exception that the upper and lower sidewalls 19 and 20 include elongated guide tracks 42 and 44 formed therein, as best seen in Figure 5. A mirror panel 50 includes a rectangular frame 52 with guide pins 52 extending outwardly from opposite corners thereon and fitting within the guide tracks 42 and 44, respectively, permitting the mirror panel 50 to slide along and within the frame 40 as well as pivot, as illustrated in phantom lines in Figure 4. A mirror 56 is positioned on one side of the mirror panel 50 for use as a vanity mirror. The right edge of the mirror panel 50, as illustrated in Figure 4, includes handle means 53 facilitating movement of the mirror panel within the guide tracks 42 and 44 as well as a springloaded snap lock 55 which fits within a detent 45 formed in the vertical sidewalls of the frame 40 to hold the mirror panel 50 in a position flush with respect to the frame 40 and the visor body.

As illustrated in Figure 4, the mirror panel 50 can be opened and pivoted about a vertical axis generally parallel to the plane of the visor 10 such that the mirror panel 50 can be reversed, as illustrated in Figure 6, with the opposite side of the mirror panel 50 including a pocket 58 formed therein for receiving items such as parking coupons, combs, or the like. The pocket 58 is formed by an overlying panel of upholstery material in the same manner as pocket 37, shown in Figure 1. With the construction shown in Figures 4 to 6, a larger mirror 56 can be provided as well as a larger storage pocket on a reverse side of the mirror panel. Also, by providing a panel which opens and can be reversed, access to the storage area behind the panel for items such as maps 60, illustrated in Figures 4 and 6, is facilitated.

Referring now to Figure 7, a further alternative embodiment of a visor is illustrated in which the frame assembly 16, 40 and panel assembly 30, 50 is replaced with an integrated covered mirror and storage pocket assembly 80. The assembly 80 comprises a frame 82 which is generally rectangular and includes a peripheral flange 84 extending therearound and fits within a recess such as the recess 14 formed in the body of a visor 10, such as shown in Figure 1. The frame 82 includes a curvilinear wall 85 at one end which extends between sidewalls 81 and 83 and terminates at its right edge against a flange 84 and defines at its left edge 86 an opening 87 for insertion of objects such as roadmaps or the like behind panel member 88 and within the recessed body of the visor. Integrally moulded within the rectangular flange 84 is a face panel 88 having an opening 89 which selectively exposes a mirror comprising a two piece structure including a mirror panel 92 and an integrally formed backing material 94, as illustrated in Figure 9. A generally rectangular, planar cover 100 selectively closes the rectangular opening 89 and is seen in Figure 8 and includes a raised handle 102 extending along one edge and is centrally located for convenience in opening and closing the cover 100. At each of the four corners of the cover 100, there are integrally formed curved leaves 104 to bias the cover between the panel 88 and the surface of the mirror 92 to provide a smoothly moving cover which is rattle free.

The frame 82 is integrally moulded of a suitable polymeric material such as polycarbonate as is cover 100. The assembly 80 is manufactured by first inserting the cover 100 in position from the rear side of the frame 82 positioning the mirror assembly 90 over the cover assembly and heat staking the lower edges of the walls 81 and 83, as illustrated in Figure 10, to complete the assembly of the frame insert package 80. The package is then installed in the recess 14 provided in the visor body 10 by suitable fastening means such as screws or bonding adhesive in a conventional manner.

**Claims**

1. A visor (10) for a vehicle, comprising a visor body defining a recess (14) therein which opens towards one side of the body; a separate mirror panel (30, 50, 80) supporting a mirror (34, 56, 92) thereon, the panel being coupled to the body in such a way that in at least one position it encloses a substantial portion of the recess; characterised in that, in the said position and with the side of the body vertical, there is a vertically-extending opening (38, 87) between an edge of the recess and an edge of the panel for insertion in a horizontal direction of objects into the recess for storage behind the panel.

2. A visor as claimed in Claim 1 in which the recess comprises guide means (42, 44) extending along upper (19) and lower (20) edges thereof and wherein the panel includes means (54) engaging the guide means for permitting the panel to be reversed with the side for the mirror facing the visor body.

3. A visor as claimed in Claim 2 in which the guide means comprises elongated slots (42, 44) and the engaging means comprises pins (54) extending from opposite edges of the panel into the slots permitting the panel to pivot on an axis parallel to the plane of the visor body and permitting the panel to slide along the guide means for reversing the panel.

4. A visor as claimed in any one of the preceding claims including latch means (55) for releasably securing the panel in a fixed position.

5. A visor as claimed in any one of the preceding claims in which the panel includes pocket means (58) for storage on a side opposite the panel from the mirror.

6. A visor as claimed in any one of the preceding claims in which the mirror covers only a portion of the panel and the panel includes pocket means (37) for storage positioned adjacent the mirror on the panel.

7. A visor as claimed in any one of the preceding claims in which the recess includes a floor (15) extending substantially parallel to the panel and wherein the floor (15) includes inclined ramp means (23, 24) located opposite the opening for facilitating insertion and removal of planar objects into the recess behind the panel.

8. A visor as claimed in any one of the preceding claims including door means (100) mounted to the panel for selectively covering the mirror.

9. A visor as claimed in Claim 8 in which the cover (100) is positioned between the panel and the mirror, and integrally includes leaf spring means (104) for holding the cover in a selected position.

10. A visor as claimed in Claim 9 in which the cover is rectangular and the spring means are curved legs integrally formed at the corners of the cover.

**Patentansprüche**

1. Blendschutz (10) für ein Fahrzeug mit einem Blendenkörper, in dem eine Vertiefung (14) gebildet ist, die nach einer Seite des Körpers hin offen ist; und einem getrennten Spiegelpaneel (30, 50, 80), das einen Spiegel (34, 56, 92) trägt und so mit dem Körper gekoppelt ist, daß es in mindestens einer Stellung einen beträchtlichen Teil der Vertiefung verschließt, dadurch gekennzeichnet, daß in der genannten Stellung und bei vertikal verlaufender Seite des Körpers eine vertikal verlaufennde Öffnung (38, 87) zwischen einem Rand der Vertiefung und einem Rand des Paneels zum Einsetzen von Gegenständen in horizontaler Richtung in die Vertiefung zur Aufbewahrung hinter dem Paneel vorliegt.

2. Blendschutz nach Anspruch 1, bei dem die Vertiefung Führungsmittel (42, 44) enthält, die längs des oberen (19) und des unteren (20) Randes der Vertiefung verlaufen und bei dem das Paneel Mittel (54) enthält, die an den Führungsmitteln angreifen, um eine Umkehrung des Paneels mit der Seite für den Spiegel zum Blendenkörper hin zu gestatten.

3. Blendschutz nach Anspruch 2, bei dem die Führungsmittel längliche Nuten (42, 44) enthalten und die angreifenden Mittel Stifte (54) enthalten, die von entgegengesetzten Rändern des Paneels in die Nuten vorspringen, so daß das Paneel um eine Achse parallel zur Ebene des Blendenkörpers schwenken und das Paneel zum Umdrehen des Paneels längs der Führungsvorrichtung gleiten kann.

4. Blendschutz nach einem der vorhergehenden Ansprüche mit einer Verriegelungsvorrichtung (55) zum lösbaren Sichern des Paneels in einer festgestellten Position.

5. Blendschutz nach einem der vorhergehenden Ansprüche, bei dem das Paneel eine Taschenanordnung (58) zur Aufbewahrung an einer dem Spiegel entgegengesetzten Seite des Paneels enthält.

6. Blendschutz nach einem der vorhergehenden Ansprüche, bei dem der Spiegel nur einen Teil des Paneels bedeckt und das Paneel eine Taschenanordnung (37) zur Aufbewahrung enthält; die neben dem Spiegel auf dem Paneel angeordnet ist.

7. Blendschutz nach einem der vorhergehenden Ansprüche, bei dem die Vertiefung einen Boden (15) aufweist, der im wesentlichen parallel zum Paneel verläuft und bei dem der Boden (15) eine geneigte Rampenanordnung (23, 24) enthält, die gegenüber der Öffnung angeordnet ist, um das Einführen und Entfernen von ebenen Gegenständen in die Vertiefung hinter dem Paneel zu erleichtern.

8. Blendschutz nach einem der vorhergehenden Ansprüche mit einer Türanordnung (100), die zur wahlweisen Abdeckung des Spiegels am Paneel angebracht ist.

9. Blendschutz nach Anspruch 8, bei dem der Deckel (100) zwischen dem Paneel und dem Spiegel angeordnet ist und integral eine Blattfederanordnung (104) zum Halten des Deckels in einer ausgewählten Stellung enthält.

10. Blendschutz nach Anspruch 9, bei dem der Deckel rechteckförmig ist und die Federanordnung aus gekrümmten Schenkeln besteht, die an den Ecken des Deckels integral gebildet sind.

**Revendications**

1. Pare-soleil (10) destiné à un véhicule, comportant un corps de pare-soleil pourvu d'un évidement (14) qui y est ménagé et qui s'ouvre vers un seul côté du corps ; un panneau séparé (30,50,80) de miroir destiné à supporter un miroir (34,56,92) sur ce panneau, le panneau étant relié au corps de façon à entourer, à au moins une position de celui-ci, une partie substantielle de l'évidement ; caractérisé en ce que, dans cette position, et lorsque le côté du corps est vertical, il existe une ouverture (37,87) située entre un bord de l'évidement et un bord du panneau pour permettre d'insérer des objets dans l'évidement dans une direction horizontale afin de les ranger derrière le panneau.

2. Pare-soleil selon la revendication 1, dans lequel l'évidement comporte des moyens (42,44) de guidage s'étendant le long des bords supérieur (19) et inférieur (20) de celui-ci et dans lequel le panneau comprend des moyens (54) coopérant avec les moyens de guidage pour permettre au panneau d'être retourné, le côté destiné au miroir faisant face au corps du pare-soleil.

3. Pare-soleil selon la revendication 2, dans lequel les moyens de guidage comportent des rainures allongées (42,44) et les moyens de coopération comportent des doigts (54) qu¡ s'étendent à partir des bords opposés du panneau jusque dans ces rainures en permettant au panneau de tourner autour d'un axe parallèle au pian du corps du pare-soleil et en permettant au panneau de coulisser le long des moyens de guidage pour retourner le panneau.

4. Pare-soleil selon l'une quelconque des revendications précédentes comprenant des moyens (55) de verrouillage destinés à assujettir le panneau, avec la faculté d'être libéré, dans une position fixe.

5. Pare-soleil selon l'une quelconque des revendications précédentes dans lequel le panneau comprend un moyen (58) formant poche destiné au rangement et situé sur un côté opposé du panneau par rapport au miroir.

6. Pare-soleil selon l'une quelconque des revendications précédentes, dans lequel le miroir recouvre seulement une partie du panneau et le panneau comprend un moyen (37) formant poche destiné au rangement et positionné sur le panneau à proximité du miroir.

7. Pare-soleil selon l'une quelconque des revendications précédentes, dans lequel l'évidement comprend un fond (15) qui s'étend pratiquement parallèlement au panneau, et le fond (15) comprend des moyens (23,24) formant rampes inclinées placés en face de l'ouverture et destinés à faciliter l'insertion et l'enlèvement d'objets de formes planes dans l'évidement derrière le panneau.

8. Pare-soleil selon l'une quelconque des revendications précédentes, comprenant un moyen (100) formant porte monté sur le panneau et destiné à recouvrir le miroir d'une façon sélective.

9. Pare-soleil selon la revendication 8, dans lequel le couvercle (100) est positionné entre le panneau et le miroir, et comprend d'un seul tenant des moyens (104) formant ressorts à lame destinés à maintenir le couvercle en une position choisie.

10. Pare-soleil selon la revendication 9, dans lequel le couvercle est rectangulaire et les moyens formant ressorts sont des pattes courbes formées d'un seul tenant aux coins du couvercle.

FIG 1

FIG 2

FIG 3

FIG 7

FIG 8

FIG 9

FIG 10

FIG 4

FIG 5

FIG 6